# NOUVEAU FASCICULE DE BREVET EUROPEEN

(11) **EP 2 449 328 B2**
(45) Date de publication et mention de la décision concernant l'opposition: **28.10.2020**
(45) Mention de la délivrance du brevet: 27.09.2017
(21) Numéro de dépôt: 10734777.5
(22) Date de dépôt: 30.06.2010
(51) Int. Cl.: C04B 2/10, C04B 7/43, F27B 7/20

(54) **PROCÉDÉ DE FABRICATION DE CLINKER DE CIMENT DANS UNE INSTALLATION**
VERFAHREN ZUR HERSTELLUNG VON ZEMENTKLINKER IN EINEM WERK
METHOD FOR PRODUCING CEMENT CLINKER IN A PLANT

(30) Priorité: 02.07.2009 FR 0903250
(43) Date de publication de la demande: 09.05.2012
(73) Titulaire: Fives FCB, 59650 Villeneuve d'Ascq (FR)
(72) Inventeur: DEVROE, Sébastien, F-59830 Bouvines (FR)
(74) Mandataire: Boubal, Denis Henri Jacques
(86) Numéro de dépôt international: PCT/FR2010/000478
(87) Numéro de publication internationale: WO 2011/001044

(56) Documents cités:
- EP-A- 0 464 631
- EP-A- 1 923 367
- WO-A1-2008/056068
- FR-A- 2 281 792
- JP-A- S49 117 517
- US-A- 3 895 955
- US-A- 4 017 253
- US-A- 4 022 568
- US-A- 4 388 067
- US-A- 4 402 667
- US-B1- 6 749 681
- DATABASE WPI Week 197850 Thomson Scientific, London, GB; AN 1978-89803A XP002564448 -& DD 132 733 A1 (FEIGE F) 25 octobre 1978 (1978-10-25)
- Shakourzadeh Khalil: "Techniques de fluidisation", In: "Techniques de L'ingénieur, traité Génie des procédés, 10 Mars 2002
- CO² capture in the cement industry, juillet 2008
- Tim Dixon: "Presentation: IEA Greenhouse Gas R&D Programme Update", 16 novembre 2008
- "Lexikon der Verfahrenstechnik" In: "Lueger Lexikon der Technik", 1970, Deutscher Verlags Anstalt, Stuttgart pages 585-587,

## Description

L'invention concerne un procédé de fabrication de clinker de ciment dans une installation.

La fabrication de ciment utilise pour sa plus grande part une matière cuite, le clinker, qui est produit à partir de minéraux, dont le constituant essentiel est le carbonate de calcium.

L'élaboration du clinker passe par une opération de cuisson qui produit de grandes quantités de dioxyde de carbone, tant par la décomposition du carbonate de calcium que par la combustion du combustible nécessaire à l'opération.

La production d'une tonne de ciment dit Portland s'accompagne ainsi de l'émission d'environ 530 kg de CO₂ venant de la matière traitée et de 250 à 300 kg de CO₂ venant du combustible. Ce dioxyde de carbone est émis dans les fumées, à une concentration inférieure à 30 %, le composant principal des fumées étant de l'azote. Dans ces conditions, le dioxyde de carbone est difficile à isoler et à séquestrer.

La fabrication de clinker de ciment utilise le plus souvent un procédé de cuisson, dit en voie sèche, où les matières premières préalablement broyées sous forme d'une farine, sont calcinées dans un four rotatif. Afin de diminuer les besoins énergétiques de l'opération, des échangeurs ont été ajoutés en amont et en aval du four rotatif, et récupèrent directement la chaleur contenue dans les matières et les fumées sortant du four.

En amont, c'est un préchauffeur à cyclones dans lequel la matière crue est préchauffée en suspension, et partiellement décarbonatée. En aval, c'est un refroidisseur de clinker dans lequel la matière cuite est refroidie par le soufflage d'air froid.

La plupart des installations fonctionnant en voie sèche comportent un réacteur de combustion en bas du préchauffeur, appelé précalcinateur, dans lequel est apportée une part importante du combustible consommé par l'installation, et dans lequel le carbonate de calcium contenu dans la matière en suspension réalise une majeure partie de sa réaction de décarbonatation.

Une méthode pour augmenter la concentration du CO₂ dans les fumées de combustion consisterait à éviter la dilution du gaz de combustion par de l'azote en utilisant un flux de gaz riche en oxygène pour l'alimentation du précalcinateur. Le volume de fumée généré serait ainsi diminué par rapport à une alimentation traditionnelle à l'air, le flux de gaz dans le précalcinateur devenant toutefois insuffisant pour le bon fonctionnement aéraulique du précalcinateur. Afin de pallier cette contrainte, on recycle une partie des fumées du préchauffeur voire du précalcinateur vers le précalcinateur résultant en une augmentation des dépenses thermiques. On connaît ainsi du document EP-1.923.367 un tel procédé où le précalcinateur est alimenté, d'une part, par un gaz riche en oxygène et, d'autre part, par le recyclage d'une partie des fumées produits par le précalcinateur.

Certaines installations comportent deux préchauffeurs, l'un qui reçoit les fumées du four et une partie de la matière à traiter avant de conduire lesdites matières vers le précalcinateur, et l'autre qui reçoit les fumées du précalcinateur et l'autre partie des matières à traiter. Comme le précalcinateur reçoit la majeure partie du combustible de l'installation, et comme la majeure partie de la décarbonatation de la matière intervient dans le précalcinateur, plus de 75 % du dioxyde de carbone sont contenus dans les fumées du second préchauffeur.

Le but de l'invention consiste, dans une installation du type ci-dessus décrit, c'est-à-dire à deux préchauffeurs, à augmenter fortement la concentration du dioxyde de carbone dans les fumées du second préchauffeur associé au précalcinateur, et ainsi à faciliter la séquestration de la majeure partie du dioxyde de carbone généré dans l'installation.

Plus particulièrement, le but de la présente invention est de proposer un procédé dans une installation qui permette de concentrer le CO₂, sans augmenter les dépenses thermiques.

Un autre but de l'invention est de ne pas modifier sensiblement le procédé utilisé habituellement pour la production de clinker de ciment.

Un autre but de l'invention est de ne pas modifier sensiblement la consommation thermique de l'installation, et ainsi d'éviter que la recherche de séquestration du dioxyde de carbone s'accompagne d'une augmentation de la production du dioxyde de carbone consécutive à une augmentation de la consommation thermique.

L'invention concerne un procédé de fabrication de clinker de ciment dans une installation comprenant :
- un premier préchauffeur à cyclones et un second préchauffeur à cyclones destinés à préchauffer respectivement une première et une seconde parties de matière crue,
- un précalcinateur utilisant un gaz de combustion pour brûler un combustible, les fumées produites par ledit précalcinateur étant dirigées vers ledit second préchauffeur à cyclones,
- un four rotatif, muni d'un brûleur de combustible, les fumées produites par le four rotatif étant dirigées vers le premier préchauffeur à cyclones,
- un refroidisseur à clinker par soufflage d'un gaz de refroidissement à travers le clinker au niveau de la sortie dudit four rotatif, procédé dans lequel :
- on préchauffe la première partie de matière crue dans le premier préchauffeur à cyclones,
- on préchauffe la seconde partie de matière crue dans le second préchauffeur à cyclones,
- on précalcine la première partie de matière crue préchauffée et la seconde partie de matière crue préchauffée dans le précalcinateur avant de cuire les matières précalcinées dans le four rotatif et de refroidir les matières cuites dans le refroidisseur à clinker.

Selon le procédé conforme à l'invention :
- le gaz de combustion au précalcinateur contient entre 90 % et 100 % d'oxygène en volume,
- le précalcinateur est un lit fluidisé, le gaz de fluidisation étant ledit gaz de combustion,
- on précalcine les matières au précalcinateur, sans recyclage des fumées audit précalcinateur

Selon des caractéristiques optionnelles prises seules ou en combinaison :
- on mélange le combustible destiné au précalcinateur avec les matières préchauffées avant l'introduction desdites matières préchauffées dans ledit précalcinateur ;
- la vitesse de gaz de fluidisation est inférieure à 2 m/s ;
- le temps de séjour des matières dans le précalcinateur est supérieur à 1 minute et inférieur à 20 minutes ;
- la granulométrie du combustible est supérieure ou égale à 1 mm, en tout ou partie ;
- on capte le dioxyde de carbone des fumées en sortie du second préchauffeur à cyclones ;
- une partie des fumées du second préchauffeur à cyclones est utilisée comme fluide de transport pneumatique pour des combustibles solides et/ou comme fluide de pulvérisation pour des combustibles liquides ou encore comme fluide de nettoyage dans ledit second préchauffeur.

L'invention sera mieux comprise à la lecture de la description suivante accompagnée de l'unique figure illustrant un mode de réalisation de l'invention.

L'invention concerne un procédé de fabrication de clinker de ciment dans une installation comprenant :
- un premier préchauffeur à cyclones 5 et un second préchauffeur à cyclones 7 destinés à préchauffer respectivement une première 4 et une seconde 6 parties de matière crue,
- un précalcinateur 1 utilisant un gaz de combustion 9 pour brûler un combustible, les fumées 8 produites par ledit précalcinateur 1 étant dirigées vers ledit second préchauffeur à cyclones 7,
- un four rotatif 2, muni d'un brûleur de combustibles, les fumées 18 produites par le four rotatif étant dirigées vers le premier préchauffeur à cyclones 5,
- un refroidisseur à clinker 3 par soufflage d'un gaz de refroidissement au niveau de la sortie dudit four rotatif 2.

Selon le procédé :
- on préchauffe la première partie 4 de matière crue dans ledit premier préchauffeur à cyclones 5,
- on préchauffe la seconde partie 6 de matière crue dans ledit second préchauffeur à cyclones 7,
- on précalcine la première partie de matière crue préchauffée 41 et la seconde partie de matière crue préchauffée 61 dans le précalcinateur 1 avant de cuire les matières précalcinées dans le four rotatif et de refroidir les matières cuites dans ledit refroidisseur à clinker.

Selon l'invention, le gaz de combustion 9 au précalcinateur 1 présente une concentration en oxygène comprise entre 90 % et 100 %.

Avantageusement, le précalcinateur 1 est un lit fluidisé 13, le gaz de fluidisation étant ledit gaz de combustion. La vitesse du gaz de fluidisation peut-être inférieure à 2 m/s.

Ainsi, les faibles vitesses de gaz régnant dans le lit fluidisé, plus faibles que dans les précalcinateurs de l'état de l'art dits à flux entraîné, permettent de réaliser la précalcination sans recyclage des fumées au précalcinateur, recyclage qui est généralement rencontré dans les installations où l'on désire concentrer le CO₂, dans le but de le séquestrer (i.e. EP 1.923.367). Le temps de séjour des matières dans le précalcinateur peut être supérieur à 1 minute et inférieur à 20 minutes. Ce temps de séjour est bien supérieur au temps de séjour des matières desdits précalcinateurs à flux entraînés de l'état de l'art. Ces longs temps de séjour permettront notamment d'utiliser des combustibles de granulométrie supérieure ou égale à 1 mm, combustibles à moindre coût en comparaison des combustibles de granulométrie bien inférieurs utilisés dans les précalcinateurs à flux entraînés des installations de l'état de l'art.

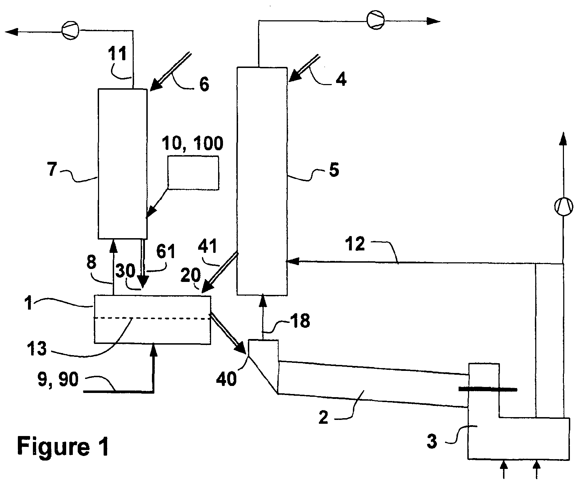

Ce combustible 10 destiné au précalcinateur 1 peut être mélangé avec les matières préchauffées. Plus particulièrement selon l'exemple de la figure 1, le combustible 10 est mélangé avec la seconde partie 61 des matières préchauffées avant l'introduction desdites matières préchauffées 61 dans le précalcinateur 1 Le combustible 10 est ainsi mélangé à la matière avant introduction dans le lit fluidisé.

Ainsi, la combustion s'opère de façon répartie et la chaleur générée par la combustion est consommée au fur et à mesure de sa production dans la réaction de décarbonatation de la matière, de telle sorte que la température reste dans le domaine défini par la réaction de décarbonatation, c'est-à-dire à une valeur inférieure à 950 °C.

La quantité de la seconde partie 6 de matière (farine) introduite dans le second préchauffeur 7 est adaptée à la quantité de fumée de telle sorte que l'on obtient un fonctionnement aéraulique convenable dans ledit second préchauffeur 7. A titre d'exemple non limitatif, la première partie 4 des matières crues représente environ 60 à 70 % de la matière crue et la seconde partie des matières crues 6 de 30 à 40 % de la matière crue. Afin d'obtenir un fonctionnement aéraulique convenable dans le premier préchauffeur à cyclones 5, une partie de l'air réchauffé par les matières cuites dans ledit refroidisseur à clinker 3 peut être conduite dans le premier préchauffeur à cyclones 5 notamment via la conduite 12.

On capte le dioxyde de carbone des fumées 11 en sortie du second préchauffeur à cyclones 7. La concentration en dioxyde de carbone est largement supérieure à 75 % (en volume).

Une partie des fumées 11 du second préchauffeur à cyclones 7 peut être utilisée comme fluide de transport pneumatique pour des combustibles solides et/ou comme fluides de pulvérisation pour des combustibles liquidés ou encore comme fluides de nettoyage dans ledit second préchauffeur 7.

La présente divulgation décrit également une installation de fabrication de clinker de ciment convenant notamment pour la mise en oeuvre du procédé.

Cette installation comprend :
- un premier préchauffeur à cyclones 5 et un second préchauffeur à cyclones 7 destinés à préchauffer respectivement une première partie 4 et une seconde 6 partie de matière crue,
- un précalcinateur 1, des fumées 8 produites par ledit précalcinateur 1 étant dirigées vers ledit second préchauffeur à cyclones 7, ledit précalcinateur 1 présentant une entrée 20 pour la matière préchauffée dans ledit premier préchauffeur à cyclones 5 et une entrée 30 pour la matière préchauffée dans ledit second préchauffeur à cyclones 7,
- un four rotatif 2 muni d'un brûleur de combustibles, les fumées 18 produites par le four rotatif 2 étant dirigées vers le premier préchauffeur à cyclones 5, ledit four rotatif 2 présentant une entrée 40 pour les matières calcinées dans ledit précalcinateur 1,
- un refroidisseur à clinker 3 par soufflage d'un gaz de refroidissement au niveau de la sortie dudit four rotatif 2.

Selon l'invention, l'installation comprend des moyens 90 pour alimenter le précalcinateur 1 d'un gaz de combustion 9 contenant entre 90 % et 100 % d'oxygène en volume.

Le précalcinateur 1 est un lit fluidisé 13, le gaz de combustion 9 étant le gaz de fluidisation. L'installation peut présenter en amont du précalcinateur 1 des moyens 100 de mélange des matières préchauffées avec un combustible.

Selon l'exemple de la figure 1, une conduite 12 peut permettre d'acheminer une partie de l'air réchauffé par la matière cuite dans ledit refroidisseur à clinker 3 vers le premier préchauffeur à cyclones 5 afin de maintenir un flux suffisant audit premier préchauffeur 5.

Nous décrivons maintenant en détail un exemple chiffré d'une installation non revendiquée.

L'installation de fabrication de clinker considérée est une unité de production de clinker de taille moyenne représentative de la capacité d'un grand nombre d'unités existantes, et qui produit 4.000 tonnes par jour de clinker à partir d'un débit de matière crue de 270 tonnes par heure.

Selon une mise en oeuvre préférée de cet exemple, son fonctionnement est décrit comme suit.

L'installation consomme 3.200 kJ/kg de clinker, ce qui est une valeur de consommation habituelle. Le combustible est du coke de pétrole.

Au four, on consomme 35,2 % du combustible, que l'on brûle avec 59.670 Nm³/h d'air dit second aire à 1180 °C produit dans ledit refroidisseur à clinker.

On dirige les fumées ainsi produites dans un préchauffeur (premier préchauffeur 5) à cinq étages de cyclones où l'on alimente 63,7 % de la farine, soit 172 t/h. On dirige également dans le premier préchauffeur 5 un débit de 76.830 Nm³/h d'air chaud à 400 °C en provenance du refroidisseur, via la conduite 12. Le total des gaz circulant dans le premier préchauffeur 5 permet d'assurer un rapport massique entre la matière et le gaz de 0,8 kg/kg, et d'obtenir un fonctionnement aéraulique convenable. Les fumées s'échappent à 280 °C du préchauffeur.

La décarbonatation de la matière est réalisée dans un précalcinateur 1 qui fonctionne en lit fluidisé, et reçoit 64,8 % du combustible. La combustion est assurée par de l'oxygène pur à 98 %, qui assure en même temps la fonction de gaz de fluidisation pour le lit fluidisé. Le débit d'oxygène est 22000 Nm³/h.

Le débit de fumées, généré par la combustion du combustible et par la décarbonatation des matières, soit 64000 Nm³/h, est dirigé dans un préchauffeur à cyclones (second préchauffeur à cyclones 7) qui reçoit 36,3 % de la farine soit 98 t/h. Le rapport massique entre la matière et les fumées est de 0,8 kg/kg ce qui assure un fonctionnement aéraulique convenable et un échange thermique optimal. Les fumées quittent le second préchauffeur 7 à 300 °C. La composition des fumées émise par le second préchauffeur 7 est (en volume) :
- CO₂ : 86,5 %,
- N2 : 1,0 %
- O2 ; 2,9 %
- H₂O : 9,6 %

Ces fumées contiennent 0,651 kg de CO₂ par kg de clinker, soit 75,1 % de la quantité totale générée dans l'unité de cuisson, c'est-à-dire un débit de 108.500 kg/h de CO₂ sous une forme concentrée. La teneur en CO₂ après condensation de l'eau atteint 95,7 %.

Naturellement, d'autres modes de mise en oeuvre de l'invention auraient pu être envisagés par l'homme de l'art sans pour autant sortir du cadre de l'invention définie par les revendications ci-après.

## Revendications

1. Procédé de fabrication de clinker de ciment dans une installation comprenant :
- un premier préchauffeur à cyclones (5) et un second préchauffeur à cyclones (7) destinés à préchauffer respectivement une première (4) et une seconde (6) parties de matière crue,
- un précalcinateur (1) utilisant un gaz de combustion (9) pour brûler un combustible, les fumées (8) produites par ledit précalcinateur (1) étant dirigées vers ledit second préchauffeur à cyclones (7),
- un four rotatif (2), muni d'un brûleur de combustible, les fumées (18) produites par le four rotatif (2) étant dirigées vers le premier préchauffeur à cyclones (5),
- un refroidisseur à clinker (3) par soufflage d'un gaz de refroidissement à travers le clinker au niveau de la sortie dudit four rotatif (2),
procédé dans lequel :
- on préchauffe la première partie (4) de matière crue dans ledit premier préchauffeur à cyclones (5)
- on préchauffe la seconde partie (6) de matière crue dans ledit second préchauffeur à cyclones (7),
- on précalcine la première partie de matière crue préchauffée (41) et la seconde partie de matière crue préchauffée (61) dans le précalcinateur (1) avant de cuire les matières précalcinées dans le four rotatif (2) et de refroidir les matières cuites dans ledit refroidisseur à clinker (3),
et dans lequel :
- ledit gaz de combustion (9) au précalcinateur (1) contient entre 90% et 100% d'oxygène en volume.
- le précalcinateur (1) est un lit fluidisé (13), le gaz de fluidisation étant ledit gaz de combustion,
- on précalcine les matières (4, 6) au précalcinateur (1), sans recyclage de fumées audit précalcinateur (1).

2. Procédé selon la revendication 1, dans lequel on mélange le combustible (10) destiné au précalcinateur (1) avec les matières préchauffées (61) avant l'introduction desdites matières préchauffées (61) dans ledit précalcinateur (1).

3. Procédé selon la revendication 1 ou 2, dans lequel la vitesse du gaz de fluidisation est inférieure à 2m/s.

4. Procédé selon l'une quelconque des revendications 1 à 3, dans lequel le temps de séjour des matières dans le précalcinateur (1) est supérieur à 1 minute et inférieur à 20 minutes.

5. Procédé selon la revendication 4, dans lequel la granulométrie du combustible est supérieure ou égale à 1 mm, en tout ou partie.

6. Procédé selon l'une des revendications 1 à 5, dans lequel on capte le dioxyde de carbone des fumées (11) en sortie du second préchauffeur à cyclones (7).

7. Procédé selon l'une des revendications 1 à 6, dans lequel une partie de l'air réchauffé par les matières cuites dans ledit refroidisseur à clinker (3) est conduite dans ledit premier préchauffeur à cyclones (5).

8. Procédé selon l'une des revendications 1 à 6, dans lequel une partie des fumées (11) dudit second préchauffeur à cyclones (7) est utilisée comme fluide de transport pneumatique pour des combustibles solides et/ou comme fluide de pulvérisation pour des combustibles liquides ou encore comme fluide de nettoyage dans ledit second préchauffeur (7).

9. Procédé selon la revendication 2. dans lequel on mélange le combustible avec la seconde partie (61) des matières préchauffées.

## Patentansprüche

1. Verfahren zur Herstellung von Zementklinker in einer Anlage, umfassend:
- einen ersten Zyklonvorwärmer (5) und einen zweiten Zyklonvorwärmer (7), die dazu bestimmt sind, eine erste (4) bzw. eine zweite (6) Rohmaterialmenge vorzuwärmen,
- einen Vorkalzinierer (1), der ein Brenngas (9) verwendet, um einen Brennstoff zu verbrennen, wobei die von dem Vorkalzinierer (1) erzeugten Rauchgase (8) zu dem zweiten Zyklonvorwärmer (7) geleitet werden,
- einen Rotationsofen (2), der mit einem Brennstoffbrenner versehen ist, wobei die von dem Rotationsofen (2) erzeugten Rauchgase (18) zu dem ersten Zyklonvorwärmer (5) geleitet werden,
- einen Klinkerkühler (3) durch Blasen eines Kühlgases durch den Klinker im Bereich des Ausgangs des Rotationsofens (2),
wobei bei dem Verfahren:
- die erste Rohmaterialmenge (4) in dem ersten Zyklonvorwärmer (5) vorgewärmt wird,
- die zweite Rohmaterialmenge (6) in dem zweiten Zyklonvorwärmer (7) vorgewärmt wird,
- die erste vorgewärmte Rohmaterialmenge (41) und die zweite vorgewärmte Rohmaterialmenge (61) in dem Vorkalzinierer (1) vorkalziniert werden, bevor die vorkalzinierten Materialien in dem Rotationsofen (2) gebrannt und die gebrannten Materialien in dem Klinkerkühler (3) gekühlt werden,
bei dem:
- das Brenngase (9) am Vorkalzinierer (1) zwischen 90 und 100 Vol.-% Sauerstoff enthält,
- der Vorkalzinierer (1) ein Fließbett (13) ist, wobei das Fluidisierungsgas das Brenngas ist,
- die Materialien (4, 6) am Vorkalzinierer (1) ohne Recycling der Rauchgase am Vorkalzinierer (1) vorkalziniert werden.

2. Verfahren nach Anspruch 1, bei dem der Brennstoff (10), der für den Vorkalzinierer (1) bestimmt ist, mit den vorgewärmten Materialien (61) vor der Einführung der vorgewärmten Materialien (61) in den Vorkalzinierer (1) gemischt wird.

3. Verfahren nach Anspruch 1 oder 2, bei dem die Geschwindigkeit des Fluidisierungsgases unter 2m/s beträgt.

4. Verfahren nach einem der Ansprüche 1 bis 3, bei dem die Aufenthaltszeit der Materialien in dem Vorkalzinierer (1) länger als 1 Minute und kürzer als 20 Minuten ist.

5. Verfahren nach Anspruch 4, bei dem die Granulometrie des Brennstoffes zur Gänze oder teilweise größer oder gleich 1 mm ist.

6. Verfahren nach einem der Ansprüche 1 bis 5, bei dem das Kohlendioxid der Rauchgase (11) am Ausgang des zweiten Zyklonvorwärmers (7) eingefangen wird.

7. Verfahren nach einem der Ansprüche 1 bis 6, bei dem ein Teil der durch die gebrannten Materialien wieder erwärmten Luft in dem Klinkerkühler (3) in den ersten Zyklonvorwärmer (5) geleitet wird.

8. Verfahren nach einem der Ansprüche 1 bis 6, bei dem ein Teil der Rauchgase (11) des zweiten Zyklonvorwärmers (7) als pneumatisches Transportfluid für feste Brennstoffe und/oder als Zerstäubungsfluid für flüssige Brennstoffe oder auch als Reinigungsfluid in dem zweiten Vorwärmer (7) verwendet wird.

9. Verfahren nach Anspruch 2, bei dem der Brennstoff mit dem zweiten Teil (61) der vorgewärmten Materialien gemischt wird.

## Claims

1. A method of manufacturing a cement clinker in an installation comprising :
- a first cyclone preheater (5) and a second cyclone preheater (7) meant to preheat respectively a first (4) and a second (6) raw material part,
- a pre-roaster (1) using a combustion gas (9) to burn a fuel, the fumes (8) produced by the pre-roaster (1) being directed toward said second cyclone preheater (7),
- a rotating kiln (2), provided with a fuel burner, the fumes (18) produced by the rotating kiln (2), being directed toward said first cyclone preheater (5),
- a clinker cooler (3) by cooling gas blowing through the clinker at the outlet of the rotating kiln (2),
the method wherein:
- preheating the first raw material part (4) in said first cyclone preheater (5),
- preheating the second raw material part (6) in said second cyclone preheater (7),
- pre-roasting the preheated first raw material part (41) and the preheated second raw material part (61) in the pre-roaster (1) before curing the pre-roasted materials in the rotating kiln (2) and cooling the cured materials in said clinker cooler (3), and wherein:
- said combustion gas (9) at the pre-roaster (1) comprises between 90% and 100% volume oxygen,
- the pre-roaster (1) is a fluidized bed (13), the fluidization gas being said combustion gas,
- pre-roasting the materials (4, 6) at the pre-roaster (1), without recycling the fumes at said the pre-roaster (1).

2. The method of claim 1, wherein mixing the fuel (10) meant for the pre-roaster (1) with the preheated material part (61) before introducing said preheated material part (61) in said pre-roaster (1).

3. The method of claim 1 or 2, wherein the fluidization gas speed is less than 2 m/s.

4. The method of anyone of claims 1 to 3, wherein the residence time in the pre-roaster (1) is greater than 1 minute and less than 20 minutes.

5. The method of claim 4, wherein the grain size of the fuel is greater than or equal to 1 mm, in whole or in part.

6. The method of any of claims 1 to 5, wherein capturing the carbon dioxide of the fumes (11) at the outlet of the second cyclone preheater (7).

7. The method of any of claims 1 to 6, wherein a part of the heated air by the cured materials in said clinker cooler (3) is directed in said first cyclone preheater (5).

8. The method of any of claims 1 to 6, wherein a part of the fumes (11) of said second cyclone preheater (7) is used as pneumatic transport fluid for the solid fuels and/or as pulverization fluid for the liquid fuels or furthermore as cleaning fluid in said second preheater (7).

9. The method of claim 2, wherein mixing the fuel with the second part (61) of the preheated materials.
